**Europäisches Patentamt**

**European Patent Office**

**Office européen des brevets**

(19)

(11) Veröffentlichungsnummer: **0 191 370 B1**

(12) **EUROPÄISCHE PATENTSCHRIFT**

(45) Veröffentlichungstag der Patentschrift:
17.11.88

(51) Int. Cl.⁴: **F 02 M 21/04**

(21) Anmeldenummer: **86101197.1**

(22) Anmeldetag: **30.01.86**

(54) Luftansaugstutzen für Vergaser.

(30) Priorität: **13.02.85 DE 3504796**

(43) Veröffentlichungstag der Anmeldung:
**20.08.86 Patentblatt 86/34**

(45) Bekanntmachung des Hinweises auf die Patenterteilung:
**17.11.88 Patentblatt 88/46**

(84) Benannte Vertragsstaaten:
**AT BE CH DE FR GB IT LI LU NL SE**

(56) Entgegenhaltungen:
**FR - E - 52 663
GB - A - 561 443
US - A - 3 484 220
US - A - 4 280 968
US - A - 4 369 751**

**PATENT ABSTRACTS OF JAPAN, Band 9, Nr. 114
(M-380) [1837], 18. Mai 1985**

(73) Patentinhaber: **Koppel, Hans, Lerchenweg 13,
D-4130 Wesel (DE)**

(72) Erfinder: **Koppel, Hans, Lerchenweg 13, D-4130 Wesel
(DE)**

(74) Vertreter: **Plöger, Ulrich, Dipl.-Ing., Benrather
Schlossallee 89, D-4000 Düsseldorf-Benrath (DE)**

ACTORUM AG

## Beschreibung

Die Erfindung bezieht sich auf einen Luftansaugstutzen für Vergaser von Verbrennungsmaschinen, bei der eine etwa in der Eintrittsebene liegende Ringleitung mit Austritt in den Vergaser für die wahlweise Einspeisung von gasförmigen Kraftstoffen anstelle des flüssigen Kraftstoffes besteht, wobei die Ringleitung konzentrisch zu einer Öffnung angeordnet ist, die mittels eines auf den Ansaugunterdruck im höheren Drehzahlbereich ansprechenden Drosselorgans verschliessbar ist.

Eine derartige Gaszumischdüse ist nach der US-A-4 369 751 bekannt. Mit Rücksicht auf die unterschiedlichen Betriebsbedingungen während des Leerlaufs mit geringer Drehzahl und während der hochtourigen Betriebsweise sind dabei zwei verschiedene Regeleinrichtungen vorgesehen, denen unterschiedliche Arten der Einführung des Gases in den Vergaser entsprechen. Die Gaszumischdüse wird nur dann beaufschlagt, wenn die Maschine hochtourig läuft. Für den Leerlaufbetrieb bei niedrigen Drehzahlen findet hingegen eine von einem Verdampfer-Regler ausgehende Verbindung zur Einströmleitung Anwendung. Demnach ist die Gaseinspeisung für den Leerlaufbetrieb anders gestaltet als für den Hochgeschwindigkeitsbereich.

Nach der GB-A-561 443 ist bekannt, die Öffnung bei einer Gaszumischdüse nicht völlig zu schliessen, um auch im Leerlaufbetrieb dem Vergaser Luft zuzuführen.

Weiterhin ist nach der US-A-4 280 968 eine auf Flüssigkraftstoff-Vergaser aufsetzbare Gaszumischdüse bekannt, so dass der Betrieb mit Gas und flüssigem Kraftstoff gleichzeitig erfolgen kann. Zu diesem Zweck ist eine in axialer Richtung einstellbare, düsenartig ausgebildete Verschlussscheibe mit Abstand von der Ringleitung angeordnet, welcher Abstand so bemessen ist, dass einerseits Gas aus der Ringleitung angesaugt und andererseits eine kombinierte Betriebsweise mit Gas und flüssigem Kraftstoff möglich ist.

Im allgemeinen lässt sich mit den bekannten Gaszumischdüsen dann, wenn eine für den Betrieb mit Gas geeignete Einstellung des Vergasers erreicht ist, im unteren Drehzahlbereich eine befriedigende Betriebsweise mit flüssigem Kraftstoff nicht mehr verwirklichen. Hinzu kommt, dass, bezogen auf die Verbrennungswärme, der Betrieb mit gasförmigem Kraftstoff einen etwa 10% höher liegenden Verbrauch gegenüber dem Betrieb mit flüssigem Kraftstoff erforderlich macht

Vom einleitend genannten Stand der Technik ausgehend liegt der Erfindung die Aufgabe zugrunde, die Gaszumischdüse derart weiterzuentwickeln, dass sie sowohl im Bereich niedriger Drehzahlen als auch im hochtourigen Betriebsbereich mit beiden Kraftstoffen befriedigende Leistungen erbringt, wozu gleichfalls zählt, dass der sonst eintretende Mehrverbrauch bei der Betriebsweise mit gasförmigem Kraftstoff herabgesetzt wird.

Die Erfindung löst diese Aufgabenstellung durch die in den Patentansprüchen gemachten Vorschläge.

Demnach kommt man im hohen Drehzahlbereich zu einer hinreichenden Luftansaugung, bei welcher sich das Drosselorgan von der verschliessbaren Öffnung abheben kann. Weiterhin ist aber auch im niedrigen Drehzahlbereich insbesondere eine straffe Führung der dann angesaugten, geringeren Luftmenge gewährleistet, indem bei diesem Drehzahlbereich nicht nur ein Ringspalt ausreichender Querschnittsgrösse vorgesehen wird, sondern im Anschluss an diesem Ringspalt eine wirkungsvolle Luftführung gewährleistet wird. Diese straffe Luftführung führt nach Austritt aus dem axialen Stutzen zu einer Ausbreitung des Strömungsquerschnittes, so dass es durch den auf diese Weise erzeugten Unterdruck zu einer wirkungsvollen Mischung mit dem aus der Ringleitung angesaugten Gas kommen kann.

Die insbesondere vorgesehene Ausbildung des Drosselorgans in Form eines aus Kunststoff bestehenden Ventiltellers ermöglicht nicht nur eine dichtende Anlage desselben am Rande der zentralen Öffnung, sondern zugleich eine Dämpfungswirkung. Die vorgeschlagene düsenartige Rundung der Innenkante der Scheibe am Übergang zum axialen Stutzen verbessert die Strömungsverhältnisse weiterhin.

Zur weiteren Veranschaulichung der Erfindung wird auf die sich auf ein Ausführungsbeispiel beziehenden Zeichnungen Bezug genommen. Darin zeigen:

Fig. 1 einen Längsschnitt durch die neue Gaszumischdüse, während

Fig. 2 eine Draufsicht entsprechend Fig. 1 wiedergibt.

Die Zeichnung zeigt den Luftansaugstutzen (14) eines Vergasers in schematischer Darstellung. Im Bereich seiner Eintrittsebene (17) befindet sich die Ringleitung (16) mit einem Anschluss (18) für die Versorgung mit gasförmigem Kraftstoff. Durch den Austritt 15 gelangt der gasförmige Kraftstoff in den Ansaugbereich des Luftansaugstutzens 14.

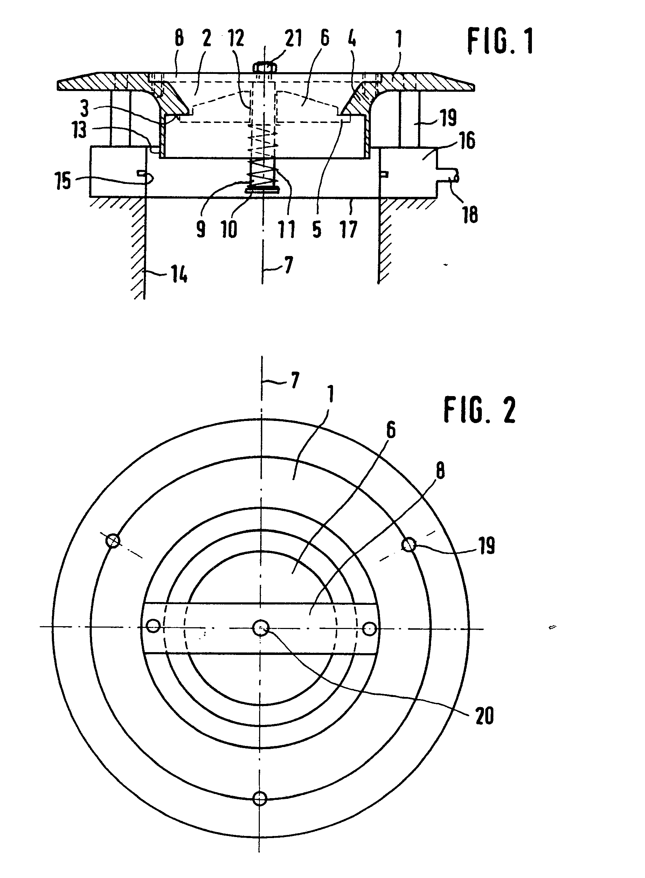

Bei der Ausführungsform nach den Fig. 1 und 2 erkennt man weiterhin insgesamt drei Abstandsstäbe 19, welche die Scheibe 1 in einem bestimmten Abstand von der Eintrittsebene 17 halten. Zentral in der Scheibe 1 besteht die Öffnung 2, in welche die auf ihrer Einlaufseite düsenartig abgeschrägte Randkantenzone 4 übergeht. Innenseitig ist die Randkantenzone 4 mit einer Ventilsitzfläche 3 für den peripheren Rand des Ventiltellers 6 ausgeführt. Letzterer steht unter der Spannung der Schraubendruckfeder 11, die sich an der abgesetzten Schulter 10 des Bolzens 9 abstützt. Der Bolzen 9 durchsetzt den Ventilteller 6 im zentralen Führungskanal 12, so dass der Ventilteller 6 bei entsprechend zunehmendem Unterdruck unter Überwindung der Spannung der Schraubendruckfeder 11 verschieblich ist. Ein Steg 8 überbrückt die Öffnung 2 und besitzt ein zentrales Einschraubgewinde 20, in welches der abgesetzte Gewindekopf des Bolzens 9 eingeschraubt werden kann. Er ist dann mittels der seine Lage fixierenden Schraubmutter 21 gesichert.

Die Anordnung ist im übrigen so getroffen, dass der Luftansaugstutzen 14, die Ringleitung 16 sowie die entsprechend gestaltete Scheibe 1 einschliesslich ihrer eingebauten Teile eine gemeinschaftliche Achse 7 aufweisen. Entlang dieser Achse strömt Verbrennungsluft in den Vergaser ein. Sofern die Scheibe 1 ihre Schliessstellung einnimmt, gelangt die Luft lediglich von der Seite ringartig in den Luftansaugstutzen 14. Sie strömt dabei entlang des inneren Aussenrandes der Scheibe 1 zunächst in radialer Richtung. Der Übergang zu dem axialen Stutzen 13, der in den Luftansaugstutzen eintaucht, ist düsenartig, so dass die Umlenkung verlustfrei erfolgt. Eine entsprechende Anrundung der der Luftströmung zugewandten Innenkante der Ringleitung 16 ist zwar zeichnungsgemäss nicht wiedergegeben, jedoch im Hinblick auf die vorgesehene Strömung zur Vermeidung einer Einschnürung zweckmässig.

## Patentansprüche

1. Gaszumischdüse für Vergaser von Verbrennungskraftmaschinen, bei der eine etwa in der Eintrittsebene (17) liegende Ringleitung (16) mit Austritt in den Vergaser für die wahlweise Einspeisung von gasförmigen Kraftstoffen anstelle des flüssigen Kraftstoffes besteht, wobei die Ringleitung (16) konzentrisch zu einer Öffnung (2) angeordnet ist, die mittels eines auf den Ansaugunterdruck im höheren Drehzahlbereich ansprechenden Drosselorgans verschliessbar ist, dadurch gekennzeichnet, dass vor der Eintrittsebene (17) mit axialem Abstand eine sie überdeckende und zu ihr im wesentlichen parallele Scheibe (1) angeordnet ist, welche die mit dem Drosselorgan verschliessbare Öffnung (2) aufweist, und dass in Strömungsrichtung vor der Ringleitung zwischen letzterer und der Öffnung (2) ein Ringspalt (24) von für die Luftansaugung im unteren Drehzahlbereich ausreichender Grösse vorgesehen ist, und dass die Scheibe (1) sich mit einem axialen Stutzen (13) geringeren Durchmessers als ein sich anschliessender Luftansaugstutzen (14) in letzteren hinein bis kurz vor den Gasaustritt (15) aus der Ringleitung (16) erstreckt.

2. Luftansaugstutzen nach Anspruch 1, dadurch gekennzeichnet, dass der Durchmesser der zentralen Öffnung (2) kleiner als diejenige des Luftansaugstutzens (14) ist.

3. Luftansaugstutzen nach den Ansprüchen 1 und 2, dadurch gekennzeichnet, dass das Drosselorgan ein Ventilteller (6) aus Kunststoff ist.

4. Luftansaugstutzen nach den Ansprüchen 1 bis 3, dadurch gekennzeichnet, dass die Innenkante der Scheibe (1) am Übergang zu ihrem axialen Stutzen (13) düsenartig gerundet ist.

## Claims

1. Gas admixing nozzle for carburettors of combustion engines, with a ring conduit (16) lying approximately in the intake plane (17) and discharging in the carburettor, for the selective supply of gaseous fuels instead of the liquid fuel, the ring conduit (16) being arranged concentrically to an opening (2), which can be sealed by means of a throttling device operated by the intake vacuum in the higher speed range, characterized in that a covering disk (1), featuring the opening (2) sealed by the throttling device, is arranged with an axial spacing in front of the intake plane (17) and essentially parallel to same, and that an annular gap (24) of adequate size for the intake of air in the lower speed range is provided in the direction of flow in front of the ring conduit between the latter and the opening (2), and that the disk (1) extends from the ring conduit (16) with an axial nozzle (13) of a smaller diameter than a subsequent air intake nozzle (14) into the latter up to immediately in front of the gas outlet (15).

2. Air intake nozzle according to claim 1, characterized in that the diameter of the central opening (2) is smaller than the diameter of the air intake nozzle (14).

3. Air intake nozzle according to claims 1 and 2, characterized in that the throttling device is a plastic valve disk (6).

4. Air intake nozzle according to claims 1 to 3, characterized in that the inner edge of the disk (1) is nozzle-like rounded at the transition to its axial nozzle (13).

## Revendications

1. Buse de mélange de gaz de moteurs à combustion pour laquelle il existe aux environs du plan d'entrée (17) une canalisation annulaire (16) avec sortie dans le carburateur pour l'alimentation possible de carburant gazeux au lieu de carburant solide, la canalisation annulaire (16) étant implantée de manière concentrique par rapport à une ouverture (2) obturable au moyen d'un organe d'obturation adéquat se déclenchant à la dépression d'aspiration dans la plage de vitesse élevée, caractérisé en ce qu'une rondelle (1) présentant une ouverture (2) obturable par l'organe d'obturation est implantée en amont du plan d'entrée (17) recouvrant partiellement ce dernier, auquel elle est parallèle en conservant un écartement axial et qu'une fente annulaire (24) d'une taille suffisante pour l'aspiration d'air dans la plage de vitesse faible est prévue dans le sens de l'écoulement en amont de la canalisation annulaire, entre cette dernière et l'ouverture (2) et que la rondelle (1) s'étend avec un manchon axial (13) de diamètre inférieur à celui d'un manchon d'aspiration d'air (14) y faisant suite et dans lequel il pénètre jusqu'à peu avant la sortie du gaz (15) de la canalisation annulaire (16).

2. Manchon d'aspiration d'air selon la revendication 1, caractérisé en ce que le diamètre de l'ouverture centrale (2) est inférieur à celui du manchon d'aspiration d'air (14).

3. Manchon d'aspiration d'air, selon les revendications 1 et 2, caractérisé en ce que l'organe d'obturation est un obturateur de soupape (6) en matière plastique.

4. Manchon d'aspiration d'air selon les revendications 1 à 3, caractérisé en ce que le bord intérieur de la rondelle (1) est arrondi comme une buse sur la transition vers son manchon axial (13).

FIG. 1

FIG. 2